# EUROPÄISCHE PATENTANMELDUNG

(11) **EP 1 469 570 A2**
(43) Veröffentlichungstag der Anmeldung: **20.10.2004**
(21) Anmeldenummer: 04007138.3
(22) Anmeldetag: 25.03.2004
(51) Int. Cl.: H02B 1/20

(54) **Sammelschinensystem für eine elektrische Installationsverteilung**

(30) Priorität: 19.04.2003 DE 20306230 U
(71) Anmelder: ABB PATENT GmbH, 68526 Ladenburg (DE)
(72) Erfinder: Kuipers, Jan Doede H., 6715 El Ede (NL)
(74) Vertreter: Miller, Toivo

(57) **Zusammenfassung**

Die Erfindung betrifft ein Sammelschienensystem mit einem Gehäuseoberteil (10a, 11a) und einem Gehäuseunterteil, mit in das Unterteil eingelegten Sammelschienen, die mit Aufnahmekontaktelemente (12) versehen sind, mit dem Gehäuseoberteil (10a, 11a) zugeordneter Hutschienenprofilanordnung (23) zum Aufschnappen von Installationsgeräten und mit im Oberteil angeordneten Schlitzen (13), durch die hindurch je eine aus dem Boden (Befestigungsseite) der Installationsgeräte herausragende Kontaktfahnen beim Aufschnappen der Installationsgerät mit den Aufnahmekontaktelementen kontaktierbar ist. Das System umfasst wenigstens zwei Grundbausteine (10, 11) mit Oberteil (10a, 11a) und Unterteil, die eine unterschiedliche Anzahl von Schlitzen (13) zum Aufschnappen einer unterschiedlichen Anzahl von Installationsgeräten aufweisen und die allein oder mit wenigstens einem weiteren Grundbaustein das Sammelschienensystem bilden.

## Beschreibung

Die Erfindung betrifft ein Sammelschienensystem nach dem Oberbegriff des Anspruches 1.

Derartige Sammelschienenanordnungen oder -systeme sind aus der DE 196 28 957 A1 bekannt geworden. Hierbei sind innerhalb eines Gehäuses, auf dessen Oberseite eine Hutprofilanordnung angebracht ist, Sammelschienen angeordnet, an denen Aufnahmekontakte für aus der Unterseite eines Installationsschaltgerätes, das auf die Hutprofilanordnung aufgeschnappt werden kann, herausragende Steckfahnen, angebracht sind. Das Gehäuse ist an die jeweilige Installationsverteilung angepasst bemessen, so dass für unterschiedliche Installationsverteilergrößen Sammelschienenanordnungen unterschiedlicher Länge vorgehalten sein müssen.

Aufgabe der Erfindung ist es, ein Sammelschienensystem der eingangs genannten Art zu schaffen, die einfacher an unterschiedliche Installationsverteilergrößen angepasst werden kann.

Diese Aufgabe wird erfindungsgemäß durch die Merkmale des Anspruches 1 gelöst.

Danach umfasst das System wenigstens zwei Grundbausteine mit Ober- und Unterteil, die eine gleiche oder unterschiedliche Anzahl von Schlitzen zum Aufschnappen einer gleicher oder unterschiedlichen Anzahl von Installationsgeräten aufweisen, die allein oder mit wenigstens einem weiteren Grundbaustein das System bilden.

Gemäß einer besonders vorteilhaften Ausgestaltung der Erfindung können auf der oberen Fläche jedes Grundbausteines Mittel vorgesehen sein, mit denen eine Hutprofiltragschiene an dem Grundbaustein oder an den Grundbausteinen befestigbar ist.

Dabei können als Mittel wenigstens vorzugsweise zwei L-förmige Haken angeformt sein, deren Schenkel in einem bestimmten Abstand zur oberen Fläche in gleiche Richtung zu einer der Schmalseitenkanten des bzw. der Grundbausteine hin vorspringen. Am Steg der Tragschiene ist dann eine der Anzahl der Haken entsprechende Anzahl erster Öffnungen vorgesehen, wobei zur Montage der Tragschiene diese auf die obere Fläche so aufgesetzt wird, dass die Haken die ersten Öffnungen durchgreifen und dann nach entgegen der Richtung, in die die Schenkel vorspringen verschoben wird, so dass die Schenkel den Steg hintergreifen und die Tragschiene so festhalten. Der bestimmte Abstand entspricht der Dicke des Steges der Hutprofilschiene, so dass der Steg unter die Schenkel geschoben werden kann.

Zusätzlich kann an der oberen Fläche zwischen den Haken ein Zapfen angeformt sein, der nach Verschieben der Tragschiene in eine zweite Öffnung im Steg der Tragschiene einschnappt und auf diese Weise die Tragschiene festhält.

In besonders vorteilhafter Weise ist ein erster Grundbaustein so ausgebildet, dass vorzugsweise vier Installationsgeräte aufschnappbar sind. Weiterhin kann ein zweiter Grundbaustein vorgesehen sein, auf den sechs Installationsgeräte aufgeschnappt werden können.

Zu diesem Zwecke weisen der erste Grundbaustein vier und der zweite Grundbaustein sechs Schlitze auf.

An jedem Grundbaustein sind erfindungsgemäß Rastmittel vorgesehen, mit denen zwei Grundbausteine miteinander an ihren benachbarten Schmalseitenkanten verrastbar sind.

Anhand der Zeichnung, in denen einige Ausführungsformen der Erfindung dargestellt sind, sollen die Erfindung sowie weitere Ausgestaltungen und Verbesserungen und weitere Vorteile näher erläutert und beschrieben werden.

Es zeigen:
- Fig. 1: eine perspektivische Ansicht zweier Grundbausteine und
- Fig. 2 bis 4: perspektivische Ansichten einiger Sammelschienenanordnungen.

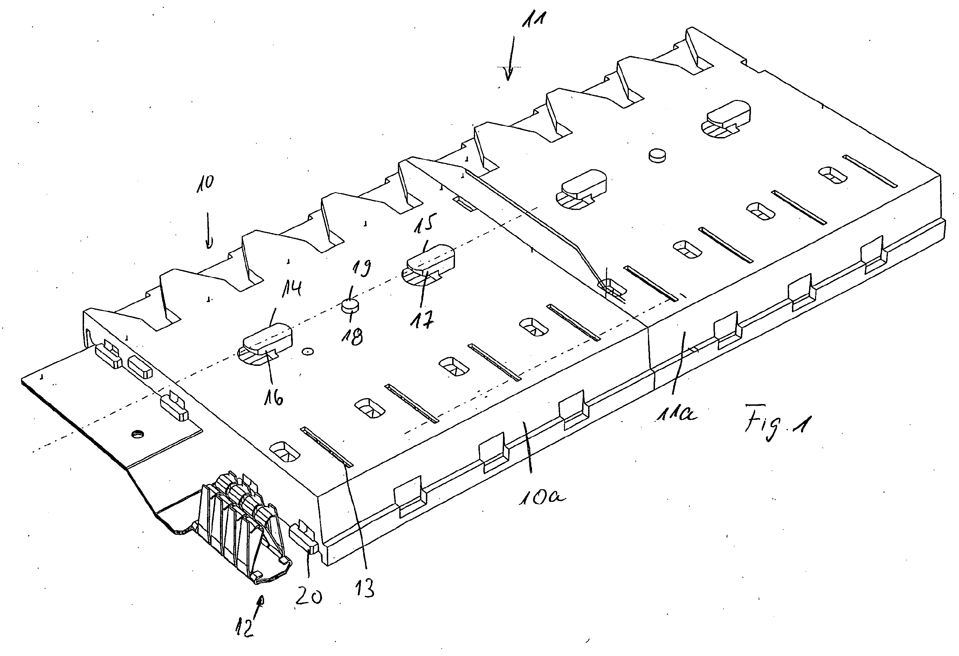

Die Fig. 1 zeigt zwei nebeneinander angeordnete und miteinander verbundene Oberteile 10a und 11a von ersten Grundbausteinen 10, 11. Diese Oberteile 10a, 11 a decken nicht näher dargestellte Unterteile ab, in denen Sammelschienen oder einfach nur Schienen eingesetzt und festgelegt sind. An diesen Schienen sind Kontaktelemente angeordnet, die den in der Zeichnung sichtbaren Kontaktelementen 12 entsprechen. Die Schienen und ihre Kontaktelemente sowie das sie aufnehmende Unterteil sind in der o.g. DE 196 28 957 A1 beschrieben.

In jedem Oberteil 10a, 11a sind vier Schlitze 13 eingebracht, die quer zur Längserstreckung jedes Grundbausteines verlaufen. Unterhalb dieser Schlitze 13 befinden sich die Kontaktelemente.

Auf der oberen Fläche des Oberteils 10a bzw. 11a sind L-förmige Haken 14, 15 angeformt, deren freie Schenkel 16, 17 in gleichem Abstand zur oberen Fläche des Oberteils 10a, 11a in gleiche Richtung hin zu einer der Schmalseitenkanten (hier nach links) vorspringen. Etwa mittig dazwischen befindet sich ein senkrecht zur oberen Fläche vorspringender Zapfen 18, dessen freie Stirnfläche schräg zu seiner Achse verlaufen kann, wobei ihr Abstand von der oberen Fläche des Oberteils im Bereich der Mantellinie, die in Richtung der vorspringenden Schenkel 16, 17 gelegen ist, etwa zu null wird.

Wenn zwei Grundbausteine miteinander verbunden werden sollen, erfolgt die Zusammenfügung mittels an den sich berührenden Stirnkanten angeformter Rastelemente 20, die mit daran angepassten Rastelementen (nicht dargestellt) am anderen Grundbaustein zusammenwirken.

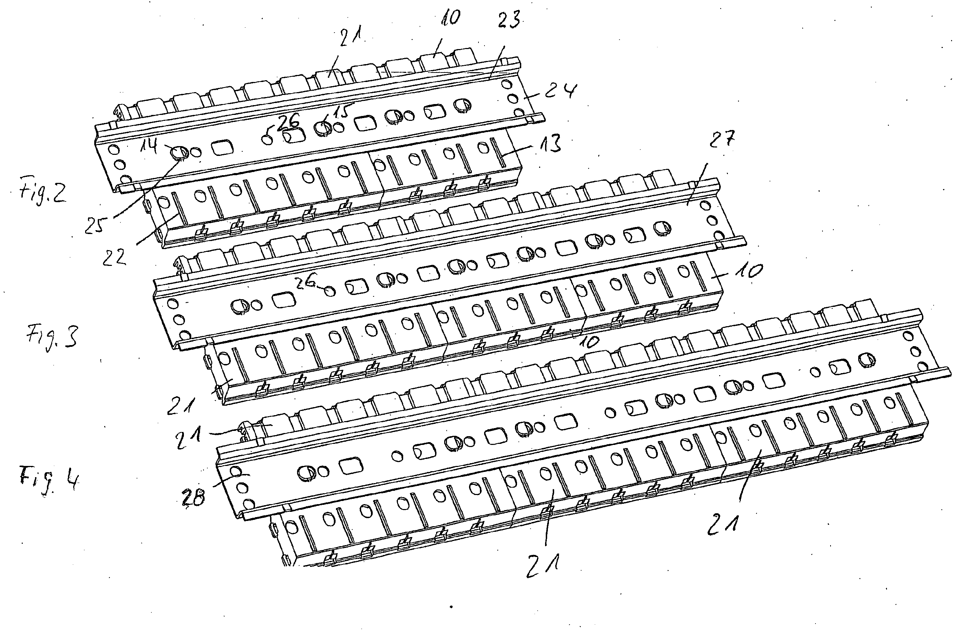

Die Fig. 2 zeigt einen ersten und einen damit verbundenen zweiten Grundbaustein 10 und 21, von denen der erste vier Kontaktfahnenaufnahmeschlitze 13 und der zweite 21 sechs Kontaktfahnenaufnahmeschlitze 22 aufweist. Durch die Aneinanderreihung der beiden Grundbausteine 10 und 21 ergibt sich eine Sammelschienenanordnung mit zehn Kontaktfahnenaufnahmeschlitzen 13, 22, so dass insgesamt zehn Installationsgeräte montiert werden können.

Auf den oberen Flächen beider Grundbausteine 10, 21 ist eine beide überdeckende Hutprofiltragschiene 23 (kurz auch Tragschiene genannt) befestigt. Diese Tragschienen 23 besitzt in ihrem Steg 23 eine Anzahl der Haken 14, 15 entsprechende Anzahl von Öffnungen 25 (erste Öffnung) und weitere Öffnungen 26 (zweite Öffnungen). Zur Montage wird die Tragschiene 24 auf die obere Fläche aufgesetzt, so dass die Haken 14, 15 durch die Öffnungen 25 greifen. Danach wird die Tragschiene 23 so entgegen der Richtung, in die die Schenkel 16, 17 vorspringen, verschoben, so dass die Schenkel 16, 17 über den Steg der Tragschiene 23 greifen. In Endstellung ist der Zapfen 16 in die weitere Öffnung 26 gerastet, so dass die Tragschiene 23 unverrückbar und nur mit besonderem Aufwand demontierbar an den Oberteilen festgehalten ist.

Die Fig. 3 zeigt eine Sammelschienenanordnung mit zwei ersten Grundbausteinen, die hier beide die Bezugsziffer 10 tragen und einem zweiten Grundbaustein 21, die von einer Tragschiene 27 überdeckt sind, wobei die Tragschiene 17 an allen drei Grundbausteinen 10, 21 fixiert ist.

Die Fig. 4 zeigt eine Anordnung mit drei zweiten Bausteinen 21, wobei die Länge der Tragschiene 28 an die Länge der drei Grundbausteine 21 angepasst ist.

Nach dem Verrasten der Grundbausteine miteinander und dem Montieren der Tragschiene wird eine sehr steife Sammelschienenanordnung gebildet, wobei die Längsversteifung in der Hauptsache durch die Tragschiene erzeugt wird.

## Patentansprüche

1. Sammelschienensystem mit einem Gehäuseoberteil (10a, 11a) und einem Gehäuseunterteil, mit in das Unterteil eingelegten Sammelschienen, die mit Aufnahmekontaktelemente versehen sind, mit dem Gehäuseoberteil (10a, 11a) zugeordneter Hutschienenprofilanordnung (23) zum Aufschnappen von Installationsgeräten und mit im Oberteil angeordneten Schlitzen (13), durch die hindurch je eine aus dem Boden (Befestigungsseite) der Installationsgeräte herausragende Kontaktfahnen beim Aufschnappen der Installationsgerät mit den Aufnahmekontaktelementen kontaktierbar sind, **dadurch gekennzeichnet, dass** das System wenigstens zwei Grundbausteine (10, 11) mit Oberteil (10a, 11a) und Unterteil umfasst, die eine gleiche oder unterschiedliche Anzahl von Schlitzen (13) zum Aufschnappen einer gleichen oder unterschiedlichen Anzahl von Installationsgeräten aufweisen und die allein oder mit wenigstens einem weiteren Grundbaustein das Sammelschienensystem bilden.

2. Sammelschienensystem nach Anspruch 1, **dadurch gekennzeichnet, dass** auf der oberen Fläche jedes Grundbausteines Mittel (14, 15; 18) vorgesehen sind, mit denen eine Hutprofiltragschiene (24, 27, 28) an dem oder den Grundbausteinen befestigbar sind.

3. Sammelschienensystem nach Anspruch 2, **dadurch gekennzeichnet, dass** als Mittel wenigstens vorzugsweise zwei L-förmige Haken (14, 15) angeformt sind, deren freie Schenkel (16, 17) in einem bestimmten Abstand zur oberen Fläche in gleiche Richtung zu einer der Schmalseitenkanten hin vorspringen, und dass am Steg der Hutprofiltragschiene (24, 27, 28) eine der Anzahl der Haken (14, 15) entsprechende Anzahl erster Öffnungen (25) vorgesehen ist, wobei zur Montage der Hutprofiltragschiene diese auf die obere Fläche so aufgesetzt, dass die Haken (14, 15) die ersten Öffnungen (25) durchgreifen, und danach entgegen der Richtung, in die die Schenkel (16, 17) vorspringen, verschoben wird, so dass die Schenkel (16, 17) den Steg hintergreifen und die Hutprofiltragschiene (24, 27, 28) so festhalten.

4. Sammelschienensystem nach Anspruch 2 oder 3, **dadurch gekennzeichnet, dass** an der oberen Fläche zwischen den Haken (14, 15) ein Zapfen (16) angeformt ist, der nach Verschieben der Hutprofiltragschiene (24, 27, 28) in eine zweite Öffnung (26) im Steg der Tragschiene einschnappt.

5. Sammelschienensystem nach einem der Ansprüche 1 bis 3, **dadurch gekennzeichnet, dass** ein erster Grundbaustein vier Schlitze (13) aufweist, so dass vier Installationsschaltgeräte aufsetzbar sind.

6. Sammelschienensystem nach einem der Ansprüche 1 bis 3, **dadurch gekennzeichnet, dass** ein zweiter Grundbaustein sechs Schlitze (22) aufweist, so dass sechs Installationsgeräte anbringbar sind.

7. Sammelschienensystem nach einem der vorigen Ansprüche, **dadurch gekennzeichnet, dass** an jedem Grundbaustein Rastmittel vorgesehen sind, mit denen zwei Grundbausteine miteinander an ihren benachbarten Schmalseitenkanten verrastbar sind.
